# EUROPÄISCHE PATENTSCHRIFT

(11) **EP 0 378 516 B1**
(45) Veröffentlichungstag und Bekanntmachung des Hinweises auf die Patenterteilung: **18.05.1994**
(21) Anmeldenummer: 90810014.2
(22) Anmeldetag: 05.01.1990
(51) Int. Cl.: B01D 29/15, B01D 29/54, B01D 29/64, B01D 29/66

(54) **Filtereinrichtung für Hauswasseranlagen**
Filtering device for domestic water installations
Dispositif filtrant pour installations d'eau domestiques

(30) Priorität: 09.01.1989 DE 3900390
(43) Veröffentlichungstag der Anmeldung: 18.07.1990
(73) Patentinhaber: Schenk, Rudolf, CH-5035 Unterentfelden (CH)
(72) Erfinder: Schlaginhaufen, Arthur, CH-4852 Rothrist (CH)
(74) Vertreter: Rottmann, Maximilian R.

(56) Entgegenhaltungen:
- WO-A-87/07850
- CH-A- 603 213
- DE-A- 3 446 772
- GB-A- 2 007 105

## Beschreibung

Die vorliegende Erfindung betrifft eine Filtereinrichtung für Hauswasseranlagen, mit einem einen Einlaufstutzen und einen Auslaufstutzen aufweisenden Anschlussgehäuse und einer mit dem Anschlussgehäuse verbundenen Filterglocke, in welcher ein rückspülbares, zylindrisches Hauptfilter und stromaufwärts vor dem Hauptfilter ein absperrbares, zylindrisches Rückspülfilter angeordnet sind und welche an ihrem unteren Ende ein Ablassventil zur Entnahme des beim Rückspülen des Hauptfilters anfallenden Schmutzwassers aufweist, wobei das Hauptfilter koaxial aussen auf einem axial verstellbaren, in eine Stellung für Normalbetrieb und eine Stellung für Rückspülbetrieb bringbaren Trägerrohr angeordnet ist, das Teile von Absperrorganen aufweist, von denen das eine Absperrorgan an der Abströmseite des Rückspülfilters und das andere Absperrorgan an der Zuströmseite des Hauptfilters angeordnet ist, und wobei im Rückspülbetrieb die Abströmseite des Rückspülfilters mit der im Normalbetrieb als Abströmseite dienenden Filterseite des Hauptfilters sowie mit dem Auslaufstutzen der Filtereinrichtung und dessen Zuströmseite mit dem Einlaufstutzen der Filtereinrichtung verbunden ist, während die im Normalbetrieb als Zuströmseite dienende Filterseite des Hauptfilters vom Einlaufstutzen abgetrennt und mit dem Ablassventil verbunden ist.

Eine solche rückspülbare Filtereinrichtung ist z.B. aus der CH-A-603 213 bekannt geworden. Ein Nachteil dieser bekannten Filtereinrichtung besteht jedoch darin, dass das verschmutzte Hauptfilter nur hydraulisch im Gegenstrom und das Rückspülfilter gar nicht gereinigt wird. Es kommt aber oft vor, dass beim Rückspülen, je nach Wasserdruck, die Schmutzablagerung am Hauptfilter zunächst an einer bestimmten Stelle weggespült wird, worauf das ganze Spülwasser durch die so entstandene Öffnung strömt. Das Hauptfilter wird also nicht gleichmässig gereinigt und bei anschliessendem Umschalten auf Normalbetrieb verbleibt eine Schmutzschicht aus Rückständen und Verunreinigungen, die dann Betriebsstörungen verursacht. Die durchgeführten Versuche haben gezeigt, dass eine einwandfreie Befreiung der Filteroberfläche von Ablagerungen auf hydraulischem Wege allein durch Rückspülen nicht möglich ist. Die aus Verunreinigungen und Ablagerungen gebildete Schicht ist unregelmässig stark, so dass beim Rückspülvorgang nur die schwächste Stelle der Schicht weggespült wird, während die übrige, überwiegende Schicht erhalten bleibt.

Der Erfindung liegt die Aufgabe zugrunde, eine Filtereinrichtung für Hauswasseranlagen mit den eingangs genannten Merkmalen so weiterzuentwickeln, dass eine einwandfreie Reinigung, sowohl des Hauptfilters als auch des Rückspülfilters erfolgt, und zwar in ein und demselben Arbeitsgang, wobei die Entnahme von gefiltertem Wasser während des Rückspül- und Reinigungsvorgangs erhalten bleibt.

Diese Aufgabe wird bei einer gattungsgemässen Filtereinrichtung dadurch gelöst, dass das Hauptfilter und das Rückspülfilter auf einem gemeinsamen Trägerrohr koaxial aussen angeordnet sind, welches zudem als beweglicher Teil des Ablassventils ausgebildet und zwischen einer Offen- und einer Schliessstellung drehbar und zugleich axial verstellbar ist, und dass sowohl im Bereich des Hauptfilters als auch im Bereich des Rückspülfilters ortsfeste, an der Aussenseite der Filter in die Filterporen greifende Reinigungsbürsten vorhanden sind, welche sich in axialer Richtung erstrecken und gegenüber welchen die Filter zur mechanischen Reinigung derselben durch die Verstellung des gemeinsamen Trägerrohres axial verschoben und zugleich gedreht werden.

Es ist zwar aus der WO-A- 87/07850 ein Apparat zur Reinigung von Flüssigkeitsfiltern bekannt, bei dem ein rückspülbares, zylindrisches Filter durch ortsfeste Bürsten gereinigt wird, an denen die Filteroberfläche durch Drehen des Filters vorbeibewegt wird. Zur Einleitung des Rückspülbetriebs ist jedoch eine ziemlich aufwendige, ausserhalb des Filtergehäuses angeordnete Steuereinrichtung vorhanden, welche auf einen bestimmten Verschmutzungsgrad des Filters anspricht. Im Rückspülbetrieb ist keine Weiterversorgung des Flüssigkeitsverbrauchers vorgesehen. Eine Anwendung dieser Lösung der Filterreinigung bei einer Filtereinrichtung nach der CH-PS 603 213 wäre jedoch zu aufwendig, insbesondere bei deren Einsatz in Hauswasseranlagen. Im Gegensatz dazu hat die erfindungsgemässe Lösung den Vorteil, dass durch die einfach zu realisierende kombinierte Axial- und Drehbewegung des Filterträgers mit verhältnismässig geringem zusätzlichen Aufwand die Steuerung sämtlicher Ventile für die Einleitung des Rückspülbetriebs und die Reinigungsbewegung auf eine einfache Antriebsdrehbewegung zurückgeführt werden kann.

Ein Ausführungsbeispiel der erfindungsgemässen Filtereinrichtung ist in der Zeichnung dargestellt, und wird im folgenden näher beschrieben. Es zeigen:
- Fig. 1: einen Vertikalschnitt durch eine Filtereinrichtung im Betriebszustand, und
- Fig. 2: einen Vertikalschnitt durch die gleiche Filtereinrichtung während der Reinigung.

Die Filtereinrichtung weist ein Anschlussgehäuse 1 auf, welches eine ringförmige Einlaufkammer 2 mit Einlaufstutzen 3 sowie eine zentrale Auslaufkammer 4 mit Auslaufstutzen 5 besitzt. Der Einlaufstutzen 3 und der Auslaufstutzen 5 sind gleichachsig und in der Gebrauchsstellung horizontal angeordnet. Ferner weist das Anschlussgehäuse 1 noch einen weiteren Stutzen 6 auf, welcher in die Auslaufkammer 4 mündet und z.B. zum Anschliessen eines Druckmessgeräts eingerichtet sein kann.

Mit 7 ist eine Filterglocke bezeichnet, die zweckmässigerweise aus durchsichtigem Kunststoff besteht und mit Hilfe einer Überwurfmutter 8 am Anschlussgehäuse 1 lösbar befestigt ist. Zur Befestigung wird die Überwurfmutter 8 mit dem Aussengewinde 9 des Anschlussgehäuses 1 verschraubt. Die Überwurfmutter 8 stützt sich mit ihrem Randteil 10 gegen eine entsprechende Ringrippe 11 der Filterglocke 7 ab und presst dabei die ganze Filterglocke 7 mit ihrer ringförmigen Stirnfläche 12 gegen die Planfläche 13 des Anschlussgehäuses 1. Zwischen den beiden Flächen 12 und 13 ist ein Dichtungsring 14 eingesetzt.

Die Einlaufkammer 2 mündet ringförmig in die Filterglocke 7 und umfasst konzentrisch die Mündung der Auslaufkammer 4, welche mit einem Gewinde 15 zum Einschrauben eines Führungsrohrs 16 versehen ist, das sich in das Innere der Filterglocke 7 vertikal erstreckt. Das Führungsrohr 16 weist unterhalb des Gewindes einen Stützrand 17 auf und ist weiter unten mit radialen Durchbrechungen 18 versehen, die am Umfang des Führungsrohrs 16 axial auf der gleichen Höhe verteilt angeordnet sind. Oberhalb und unterhalb der Durchbrechungen 18 ist je ein O-Ring 19 bzw. 20 zu Dichtungszwecken angeordnet, wie dies später noch näher erklärt wird. Im Bereiche des unteren Endes des Führungsrohrs 16 ist ein weiterer O-Ring 21 vorgesehen.

Gleichachsig zum Führungsrohr 16 ist ein Filterträger 22 vorgesehen, welcher einen ringförmigen Mittelteil 23 aufweist, der mit sich nach oben und unten in axialer Richtung erstreckenden Hülsenteilen 24 und 25 ausgerüstet ist. Der Hülsenteil 25 des Filterträgers 22 ist unten mit Hilfe eines Bodens 26 verschlossen, welcher ein sich mittig nach unten erstreckendes Spindelrohr 27 mit Durchlassöffnung 28 besitzt. Das Spindelrohr 27 erstreckt sich durch einen Rohrstutzen 29 des Bodenteils 30 der Filterglocke 7, welcher Rohrstutzen 29 mit einem Gewinde versehen ist, so dass durch die Drehung des Spindelrohrs 27 dieses gleichzeitig axial verschoben wird. Mit der Drehung des Spindelrohrs 27 wird auch der Filterträger 22 gedreht und axial verschoben, indem er zusammen mit den Hülsenteilen 24, 25 eine schraubenlinienförmige Bewegung ausführt.

Der Hülsenteil 25 weist eine Anzahl Durchbrechungen 31 auf, die auf der Oberfläche des Hülsenteils 25 gleichmässig verteilt sind. Der genannte Hülsenteil 25 dient zur Aufnahme eines entsprechend geformten und dimensionierten Hauptfilters 32, welches aus einem Drahtgeflecht besteht und die ganze Oberfläche des Hülsenteils 25 bedeckt.

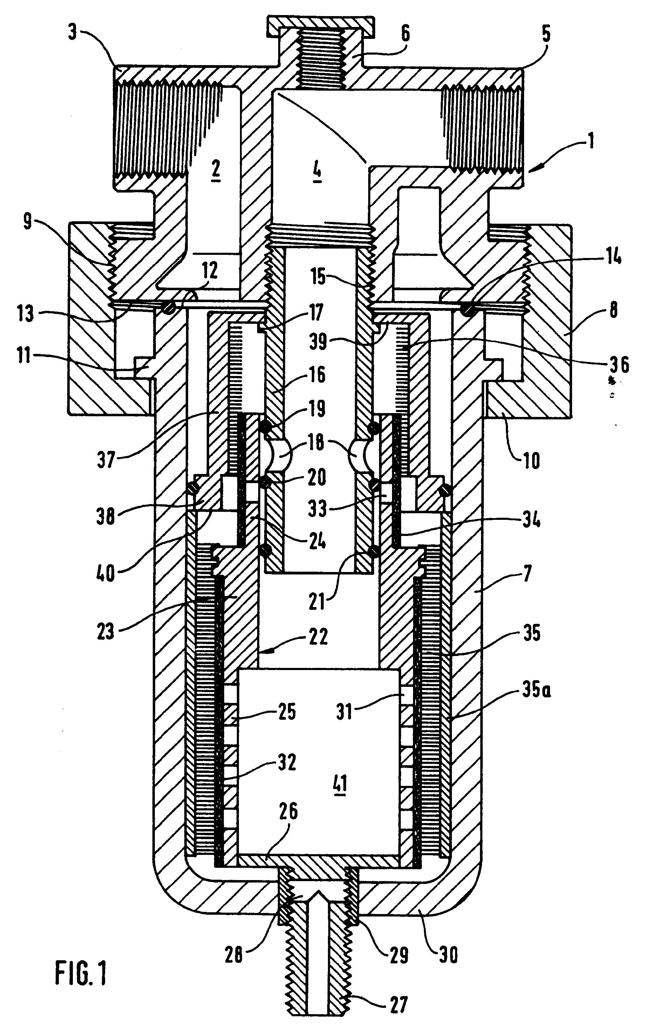

Der sich nach oben erstreckende Hülsenteil 24 ist mit an der gleichen Höhe am Umfang verteilt angeordneten Durchbrechungen 33 versehen, welche in der unteren Endlage des Filterträgers 22 (gemäss Fig. 1) unterhalb der Durchbrechungen 18 des Führungsrohrs 16 liegen, während sie nach der Drehung und axialen Verschiebung des Filterträgers 22 mit den genannten Durchbrechungen 18 radial korrespondieren.

Wie aus der Zeichnung ferner hervorgeht, ist der Hülsenteil 24 mit einem entsprechend geformten und dimensionierten Rückspülfilter 34 versehen, welches wiederum aus einem zylindrischen Drahtgeflecht besteht.

Zur Reinigung des Hauptfilters 32 und des Rückspülfilters 34 sind Reinigungsbürsten vorhanden. Die Hauptreinigungsbürsten 35 bestehen aus einzelnen, länglichen und schmalen Bürstenkörpern, welche sich in axialer Richtung erstrecken und entlang der Oberfläche des Hauptfilters 32 am Umfang verteilt in der Filterglocke 7 angeordnet sind. Jeder Bürstenkörper ist in einem leistenförmigen Bürstenträger 35a befestigt, welche Bürstenträger an der Innenwand der Filterglocke 7 in entsprechenden Führungen so untergebracht sind, dass sie bei der Drehung und axialen Verschiebung des Hauptfilters 32 dieses reinigen, indem die einzelnen Bürsten in die Poren des Filters eindringen. Zur periodischen Reinigung oder zum Auswechseln der Bürsten können diese in axialer Richtung aus den in der Zeichnung nicht dargestellten Führungen herausgezogen werden.

Zur Reinigung des Rückspülfilters 34 sind Reinigungsbürsten 36 vorhanden, welche an den Tragarmen 37 eines Bürstenträgers befestigt sind. Der Bürstenträger besteht aus einem Tragring 38 und aus den mit dem Ring verbundenen und am Umfang desselben verteilten (z.B. vier) Tragarmen 37, welche an ihrem oberen, dem Tragring 38 abgekehrten Ende mit Hilfe einer ringförmigen Halteplatte 39 zusammengefasst sind. Durch die kreisförmige Ausnehmung der Halteplatte 39 erstreckt sich das Führungsrohr 16. Die Anordnung ist dabei so getroffen, dass die Halteplatte 39 auf den Stützrand 17 des Führungsrohrs 16 zur Auflage kommt. Zweckmässigerweise sind die vier Tragarme 37 mit je einer Reihe von Reinigungsbürsten 36 bestückt.

Es sei ferner erwähnt, dass der ortsfeste Tragring 38 des Bürstenträgers zur Reinigung des Rückspülfilters 34 und der bewegliche Mittelteil 23 des Filterträgers 22 zusammen ein Abschlussorgan bilden, indem bei der kombinierten Dreh- und Axialbewegung des Mittelteils 23 dieser zuletzt gegen eine Dichtfläche 40 des Tragrings 38 zur Auflage kommt und so einen Verschluss bildet, welcher den direkten Zufluss aus der Einlaufkammer 2 zum Hauptfilter 32 und weiter durch die Durchbrechungen 31 in den Raum 41 sperrt. Anstelle der Dichtfläche könnte am Mittelteil 23 auch ein Dichtungsring vorhanden sein, welcher beim Hochfahren des Mittelteils 23 mit dem Tragring 38 dichtend zusammenwirkt.

Die Wirkungsweise der beschriebenen Einrichtung ist wie folgt:

Das Anschlussgehäuse 1 wird in die Wasserversorgung d.h. in die entsprechende, in das Haus führende Leitung eingesetzt, indem der Einlaufstutzen 3 und der Auslaufstutzen 5 mit den entsprechenden Wasserleitungen verschraubt werden. Wasser strömt durch den Einlaufstutzen 3 in die Einlaufkammer 2 und gelangt vertikal nach unten in die Filterglocke 7. Dabei werden sowohl das Führungsrohr 16 als auch die Tragarme 37 umströmt. Die Durchbrechungen 33 und 18 korrespondieren nicht, so dass kein Wasser in das Führungsrohr 16 gelangt. Zusätzlich wirken die O-Ringe 20 und 21 dichtend und verhindern ein Aufsteigen oder Abfliessen von Wasser, das in die Durchbrechungen 33 gelangt. Die Strömung führt vielmehr nach unten, in den das Hauptfilter 32 umgebenden Raum und weiter durch die Poren des Hauptfilters 32 von aussen nach innen und weiter durch die Durchbrechungen 31 in den Innenraum 41 des Hülsenteils 25. Dabei wird das Wasser durch das Hauptfilter 32 filtriert und steigt gereinigt vertikal durch das Führungsrohr 16 in die Auslaufkammer 4, wird dort abgelenkt und durch den Auslaufstutzen 5 der Verbraucherstelle zugeführt. Da die Öffnungen 33 des Hülsenteils 24 in der aus Fig. 1 ersichtlichen Betriebsstellung, wie erwähnt, mit den Durchbrechungen 18 des Führungsrohrs 16 nicht kommunizieren sondern verschlossen bleiben, wozu auch die Dichtungsringe 20 und 21 oberhalb und unterhalb der Durchbrechungen 33 dienen, kann kein Wasser durch das Rückspülfilter 34 und durch die Durchbrechungen 33 in das Innere des Führungsrohrs 16 gelangen.

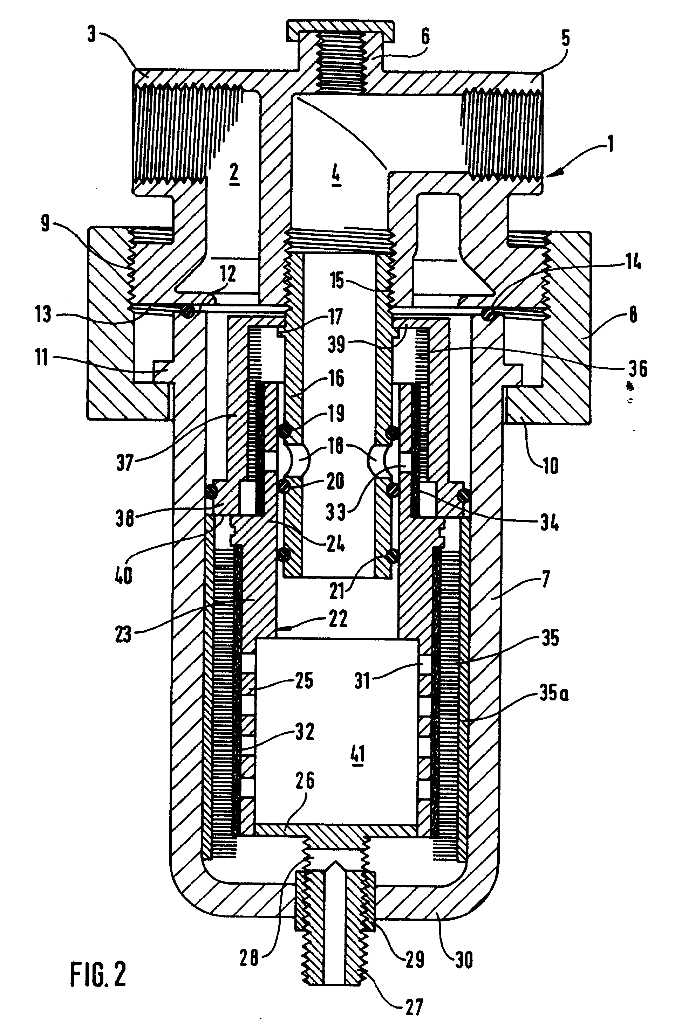

Sobald eine Reinigung des Hauptfilters 32 notwendig erscheint, wird das Spindelrohr 27 mit Hilfe einer geeigneten, in der Zeichnung nicht näher dargestellten Vorrichtung z.B. mittels eines Handrads gedreht, so dass das genannte Spindelrohr 27 nebst der Drehung auch axial, und zwar vertikal nach oben, verschoben wird, wie dies aus Fig. 2 ersichtlich ist. Mit der Drehung des Spindelrohrs 27 wird auch der Filterträger 22 gedreht und axial nach oben verschoben. Dabei werden zunächst die beiden Filter 32 und 34 mit Hilfe der ortsfesten Bürsten 35 und 36 gereinigt und von Schmutz sowie von Ablagerungen mechanisch befreit. Darüberhinaus kommen in der Endlage die Durchbrechungen 33 des Hülsenteils 24 mit den Durchbrechungen 18 des Führungsrohrs 16 in Deckung, während das durch den Mittelteil 23 und den Tragring 38 gebildete Verschlussorgan geschlossen wird. Ferner werden noch die Durchlassöffnungen 28 des Spindelrohrs 27 geöffnet.

In dieser, aus Fig. 2 ersichtlichen Stellung gelangt das Wasser aus der Einlaufkammer 2 in die Filterglocke 7, kann aber nicht weiter nach unten strömen, da der Tragring 38 und der Mittelteil 23 den nach unten führenden Weg sperren. Dagegen wird der Weg durch die Durchbrechungen 33 und 18 frei. Das Wasser gelangt in das Innere des Führungsrohrs 16, steigt dort teilweise hoch und strömt teilweise abwärts in den Innenraum 41 des Filterträgers 22. Von da aus werden die Durchbrechungen 31 in umgekehrter Richtung, d.h. von innen nach aussen durchströmt, wobei das Hauptfilter 32 vom übriggebliebenen Schmutz und von den restlichen Verunreinigungen befreit wird. Das Schmutzwasser sinkt im ringförmigen Raum zwischen Hauptfilter 32 und Filterglocke 7 nach unten und gelangt durch die Durchlassöffnung 28 und das Innere des Spindelrohrs 27 in einen Schmutzwasserbehälter.

In der beschriebenen Weise werden bei der Verdrehung des Spindelrohrs 27 beide Filter, und zwar sowohl das Hauptfilter 32 als auch das Rückspülfilter 34 mit Hilfe der zugeordneten Bürsten 35 bzw. 36 mechanisch gründlich gereinigt. In der Reinigungsstellung erfolgt zusätzlich noch eine hydraulische Reinigung, indem das Hauptfilter 32 in umgekehrter Richtung wie im Betrieb durchströmt wird. Die Wasserversorgung bleibt auch während des Reinigungsvorgangs aufrechterhalten.

Die beschriebene Filtereinrichtung eignet sich insbesondere für Hauswasseranlagen, sichert eine optimale Filterwirkung, welche somit durch eine allmähliche Verstopfung der Filterkörper nicht beeinflusst werden kann. Vielmehr wird, neben der Rückspülung des Hauptfilters, sowohl das Hauptfilter als auch das Rückspülfilter mechanisch durch Bürsteneinwirkung gereinigt.Die Wasserversorgung bleibt auch während des Reinigungsprozesses aufrechterhalten.

Es sei noch vermerkt, dass die beschriebene Filtereinrichtung sehr einfach aufgebaut ist und aus leicht ersetzbaren Teilen besteht. Viele oder sogar die meisten Bestandteile können aus Kunststoff hergestellt werden, welche auch grossen hygienischen Anforderungen genügen. Die Teile, die einer Abnützung unterworfen sind, z.B. die Bürsten, können sehr leicht ersetzt werden, wobei die diesbezüglichen Handhabungen auch vom Laien schnell und einfach durchgeführt werden können. Die Herstellung der Filtereinrichtung ist einfach und billig, und die Filterwirkung bleibt auf lange Zeit unverändert erhalten.

## Patentansprüche

1. Filtereinrichtung für Hauswasseranlagen, mit einem einen Einlaufstutzen (3) und einen Auslaufstutzen (5) aufweisenden Anschlussgehäuse (1) und einer mit dem Anschlussgehäuse (1) verbundenen Filterglocke (7), in welcher ein rückspülbares, zylindrisches Hauptfilter (32) und stromaufwärts vor dem Hauptfilter (32) ein absperrbares, zylindrisches Rückspülfilter (34) angeordnet sind und welche an ihrem unteren Ende ein Ablassventil (27, 28, 29) zur Entnahme des beim Rückspülen des Hauptfilters (32) anfallenden Schmutzwassers aufweist, wobei das Hauptfilter (32) koaxial aussen auf einem axial verstellbaren, in eine Stellung für Normalbetrieb und eine Stellung für Rückspülbetrieb bringbaren Trägerrohr (22) angeordnet ist, das Teile (23; 33) von Absperrorganen (18, 33; 23, 38) aufweist, von denen das eine Absperrorgan (18, 33) an der Abströmseite des Rückspülfilters (34) und das andere Absperrorgan (23, 38) an der Zuströmseite des Hauptfilters (32) angeordnet ist, und wobei im Rückspülbetrieb die Abströmseite des Rückspülfilters (34) mit der im Normalbetrieb als Abströmseite dienenden Filterseite des Hauptfilters (32) sowie mit dem Auslaufstutzen (5) der Filtereinrichtung und dessen Zuströmseite mit dem Einlaufstutzen (3) der Filtereinrichtung verbunden ist, während die im Normalbetrieb als Zuströmseite dienende Filterseite des Hauptfilters (32) vom Einlaufstutzen (3) abgetrennt und mit dem Ablassventil (27, 28, 29) verbunden ist, dadurch gekennzeichnet, dass das Hauptfilter (32) und das Rückspülfilter (34) auf einem gemeinsamen Trägerrohr (22) koaxial aussen angeordnet sind, welches zudem als beweglicher Teil (27, 28) des Ablassventils (27, 28, 29) ausgebildet und zwischen einer Offen- und einer Schliessstellung drehbar und zugleich axial verstellbar ist, und dass sowohl in dem Bereich des Hauptfilters (32) als auch in dem Bereich des Rückspülfilters (34) ortsfeste, an der Aussenseite der Filter (32, 34) in die Filterporen greifende Reinigungsbürsten (35, 36) vorhanden sind, welche sich in axialer Richtung erstrecken und gegenüber welchen die Filter (32, 34) zur mechanischen Reinigung derselben durch die Verstellung des gemeinsamen Trägerrohres (22) axial verschoben und zugleich gedreht werden.

2. Filtereinrichtung nach Anspruch 1, dadurch gekennzeichnet, dass das gemeinsame Trägerrohr (22) der Filter (32, 34) einen ringförmigen Mittelteil (23) sowie einen oberen Hülsenteil (24) und einen unteren Hülsenteil (25) mit Boden (26) aufweist und mit Hilfe eines Spindelrohrs (27) im Bodenteil (39) der Filterglocke (7) dreh- und axialverschiebbar gelagert ist, und dass der sich nach unten erstreckende Hülsenteil (25) zur Aufnahme des zylindrischen Hauptfilters (32) mit Durchbrechungen (31) versehen ist, welche an der Oberfläche des Hülsenteils (25) verteilt sind.

3. Filtereinrichtung nach Anspruch 2, dadurch gekennzeichnet, dass für das Trägerrohr (22) ein sich in das Innere der Filterglocke (7) mittig erstreckende Führungsrohr (16) vorhanden ist, das im Strömungsweg zum Auslauf (5) liegt und das mit dem Anschlussgehäuse (1) verschraubt ist, dass das Führungsrohr (16) mit Durchbrechungen (18) versehen ist, welche am Umfang dieses Rohrs verteilt angeordnet sind und in der Rückspülstellung der Filter (32, 34) mit entsprechenden Durchbrechungen (33) des das Führungsrohr (16) konzentrisch umgebenden oberen Hülsesnteils (24) des Trägerrohrs (22) korrespondieren, und dass das Führungsrohr (16) ober- und unterhalb der Durchbrechungen (18) mit Dichtungsringen (19, 20, 21) versehen ist, welche den Ringspalt zwischen dem Führungsrohr (16) und dem oberen Hülsenteil (24) des Trägerrohrs (22) abdichten.

4. Einrichtung nach Anspruch 3, dadurch gekennzeichnet, dass im unteren Teil der Filterglocke (7) stabförmige Hauptreinigungsbürsten (35) am Umfang der Filterglocke (7) verteilt ortsfest angeordnet sind.

5. Einrichtung nach Anspruch 4, dadurch gekennzeichnet, dass oberhalb der Hauptreinigungsbürsten (35) weitere Reinigungsbürsten (36) zur Reinigung des Rückspülfilters (34) am äusseren Umfang des Rückspülfilters (34) verteilt angeordnet sind.

6. Einrichtung nach Anspruch 5, dadurch gekennzeichnet, dass zur Aufnahme der Reinigungsbürsten (36) zur Reinigung des Rückspülfilters (34) entsprechende, sich axial erstreckende und am Umfang des Rückspülfilters (31) gleichmässig verteilt angeordnete Tragarme (37) vorhanden sind,.welche an ihren unteren Enden mittels eines Tragrings (38) und oben durch eine gemeinsame ringförmige Halteplatte (39) zusammengefasst sind.

7. Einrichtung nach Anspruch 6, dadurch gekennzeichnet, dass die Halteplatte (39) um das Führungsrohr (16) angeordnet und auf einem Stützrand (17) des Führungsrohrs (16) aufliegend axial und radial unbeweglich gehalten ist.

8. Einrichtung nach Anspruch 7, dadurch gekennzeichnet, dass das Spindelrohr (27) eine Querdurchlassöffnung (28) besitzt, welche im Normalbetrieb der Filtereinrichtung durch einen Rohrstutzen (29) des Bodenteils (30) der Filterglocke (7) verschlossen und im Rückspülbetrieb geöffnet ist.

9. Einrichtung nach Anspruch 1, dadurch gekennzeichnet, dass die Reinigungsbürsten (35, 36) in Führungen auswechselbar angeordnet sind.

## Claims

1. Filter device for domestic water systems, having a connection housing (1) which exhibits an inlet connection stop (3) and an outlet connection stop (5), and having a filter bell (7) which is connected to the connection housing (1), in which there are arranged a back-flushable cylindrical main filter (32) and, upstream of the main filter (32), a cylindrical backflushing filter (34) which can be shut off, and which filter bell has at its lower end a discharge valve (27, 28, 29) for removing the dirty water which accumulates when back-flushing the main filter (32), said main filter (32) being arranged coaxially on the outside on an axially adjustable carrier tube (22) which can be brought into a position for normal operation and a position for back-flushing operation and has parts (23; 33) of shut-off members (18, 33; 23, 28) of which one shut-off member (18, 33) is arranged on the outflow side of the back-flushing filter (34) and the other shut-off member (23, 38) is arranged on the inflow side of the main filter (32), and in back-flushing operation the outflow side of the back-flushing filter (34) being connected to the filter side, serving in normal operation as outflow side, of the main filter (32) and to the outlet connection stop (5) of the filter device, and the inflow side thereof being connected to the inlet connection (3) of the filter device, whereas the filter side, serving in normal operation as inflow side, of the main filter (32) is separated from the inlet connection stop (3) and is connected to the discharge valve (27, 28, 29): characterized in that the main filter (32) and the back-flushing filter (34) are arranged coaxially on the outside on a common carrier tube (22) which, moreover, is designed as a movable part (27, 28) of the discharge valve (27, 28, 29) and can pivot between an open position and a closed position and is at the same time axially adjustable; and in that there are provided, both in the region of the main filter (32) and in the region of the back-flushing filter (34), cleaning brushes (35, 36) which are fixed in place, which engage on the outer side of the filters (32, 34) into the filter pores, which extend in the axial direction, and with respect to which the filters (32, 34), for mechanical cleaning of the same, are axially displaced and at the same time pivoted owing to the adjustment of the common carrier tube (22).

2. Filter device according to Claim 1, characterized in that the common carrier tube (22) of the filters (32, 34) has an annular central part (23) and an upper sleeve part (24) and a lower sleeve part (25) with base (26) and, with the aid of the spindle tube (27), is mounted in the base part (39) of the filter bell (7) such that it can pivot and be axially displaced; and in that the downwardly extending sleeve part (25) is provided, in order to receive the cylindrical main filter (32), with through-passages (31) which are distributed on the surface of the sleeve part (25).

3. Filter device according to Claim 2, characterized in that there is provided for the carrier tube (22) a guide tube (16) which extends centrally into the interior of the filter bell (7), is located in the flow path to the outlet (5) and is screwed to the connection housing (1); in that the guide tube (16) is provided with through-passages (18) which are distributed on the circumference of this tube and, in the back-flushing position of the filters (32, 34), correspond with equivalent through-passages (33) of the upper sleeve part (24), surrounding the guide tube (16) concentrically, of the carrier tube (22); and in that the guide tube (16), above and beneath the through-passages (18) is provided with sealing rings (19, 20, 21) which seal the annular gap between the guide tube (16) and the upper sleeve part (24) of the carrier tube (22).

4. Device according to Claim 3, characterized in that, in the lower part of the filter bell (7), rod-shaped main cleaning brushes (35) are distributed such that they are fixed in place on the circumference of the filter bell (7).

5. Device according to Claim 4, characterized in that, above the main cleaning brushes (35), further cleaning brushes (36) for cleaning the back-flushing filter (34) are distributed on the edge of the circumference of the back-flushing filter (34).

6. Device according to Claim 5, characterized in that, in order to receive the cleaning brushes (36) for cleaning the back-flushing filter (34), there are provided corresponding and axially extending carrying arms (37) which are uniformly distributed on the circumference of the back-flushing filter (31) and are combined, at their lower ends, by means of a carrying ring (38) and, at the top, by a common annular retaining plate (39).

7. Device according to Claim 6, characterized in that the retaining plate (39) is arranged around the guide tube (16) and is retained, in a manner in which it cannot move axially and radially, such that it rests on a supporting border (17) of the guide tube (16).

8. Device according to Claim 7, characterized in that the spindle tube (27) has a transverse through-opening (28) which is closed off by a connection tube (29) of the base part (30) of the filter bell (7) in normal operation of the filter device and is open in back-flushing operation.

9. Device according to Claim 1, characterized in that the cleaning brushes (35, 36) are arranged in guides such that they can be exchanged.

## Revendications

1. Dispositif filtrant pour installations d'eau domestiques, comportant : un corps de raccordement (1) présentant une tubulure d'entrée (3) et une tubulure de sortie (5); et une cloche à filtres (7) reliée au corps de raccordement (1), dans laquelle sont disposés un filtre principal cylindrique (32) décrassable à contre-courant et, en amont du filtre principal (32), un filtre cylindrique (34), isolable, pour le filtrage de décrassage à contre-courant; cette cloche présentant à son extrémité inférieure une soupape de décharge (27, 28, 29) pour l'enlèvement de l'eau encrassée provenant du décrassage à contre-courant du filtre principal (32), ledit filtre principal (32) étant agencé extérieurement et coaxialement sur un tube-support (22) qui est déplaçable axialement, peut être mis à une position de marche normale et à une position de décrassage par contre-courant, ce tube-support présentant des parties (23; 33) d'organes d'isolement (18, 33; 23, 38), le premier organe d'isolement (18, 33) étant disposé du côté sortie du filtre 34 de filtrage pour décrassage à contre-courant, et l'autre organe d'isolement (23, 38) étant disposé du côté amont du filtre principal (32), le côté aval du filtre (34) de filtrage pour décrassage à contre-courant étant, en marche de décrassage à contre-courant, relié à celui des cotés du filtre principal (32) qui, en marche normale, est le côté aval ou côté effluent, et étant relié à la tubulure de sortie (5) du dispositif filtrant, et le côté amont de ce filtre (34) étant relié à la tubulure d'entrée (3) du dispositif filtrant, tandis que celui des côtés du filtre principal (32) qui, en marche normale, fait office de côté amont est séparé de la tubulure d'entrée (3) et est relié à la soupape de décharge (27, 28, 29), caractérisé par le fait que le filtre principal (32) et le filtre (34) de filtrage pour le décrassage à contre-courant sont agencés coaxialement et extérieurement sur un tube-support commun (22) qui est en outre réalisé en tant que partie mobile (27, 28) de la soupape de décharge (27, 28, 29) et peut être tourné en même temps que déplacé axialement entre une position d'ouverture et une position de fermeture, et par le fait qu'il y a, aussi bien dans la région du filtre principal (32) que dans la région du filtre (34) de filtrage pour le décrassage à contre-courant, des brosses de nettoyage fixes (35, 36) attaquant les pores des filtres (32, 34) sur leur côté extérieur, ces brosses s'étendant en direction axiale et les filtres (32, 34) étant, par rapport à ces brosses, déplacés à la fois axialement et en rotation, pour leur nettoyage mécanique, par le changement de position du tube-support commun (22).

2. Dispositif filtrant selon revendication 1, caractérisé par le fait que le tube-support commun (22) des filtres (32, 34) présente une partie médiane annulaire (23) ainsi qu'une partie tube supérieure (24) et une partie tube inférieure (25) avec fond (26) et est monté avec possibilité de rotation et de déplacement axial dans la partie fond (39) de la cloche à filtres (7) à l'aide d'un tube-broche (27), et par le fait que la partie tube (25) s'étendant vers le bas pour recevoir le filtre principal cylindrique (32) est pourvue d'ajours (31) qui sont répartis sur la surface de cette partie tube (25).

3. Dispositif filtrant selon revendication 2, caractérisé par le fait qu'il y a, pour le tube-support (22), un tube de guidage (16) s'étendant sensiblement centralement dans l'intérieur de la cloche à filtres (7) et se trouvant dans le trajet d'écoulement allant à la sortie (5) et étant associé par vissage au corps de raccordement (1), par le fait que ce tube de guidage (16) est muni d'ajours (18) qui sont répartis sur son pourtour et qui, dans la position de décrassage à contre-courant des filtres (32, 43), sont en correspondance avec des ajours (33) que comporte la partie tube supérieure (24) du tube-support (22) située en position concentriquement entourante par rapport au tube de guidage (16), et par le fait que ce tube de guidage (16) est muni, au-dessus et en dessous des ajours (18), d'anneaux d'étanchéité (19, 20, 21) qui assurent l'étanchéité de l'interstice annulaire entre le tube de guidage 16 et la partie tube supérieure (24) du tube-support (22).

4. Dispositif selon revendication 3, caractérisé par le fait que des brosses de nettoyage principales (35) en forme de barres sont agencées dans la partie inférieure de la cloche à filtres (7) en étant réparties en des endroits fixes contre le pourtour de ladite cloche à filtres (7).

5. Dispositif selon revendication 4, caractérisé par le fait qu'au-dessus des brosses de nettoyage principales (35) d'autres brosses de nettoyage (36) sont disposées contre le pourtour extérieur du filtre (34) de filtrage pour le décrassage à contre-courant, afin de nettoyer ce filtre (34).

6. Dispositif selon revendication 5, caractérisé par le fait que, pour recevoir ls brosses de nettoyage (36) pour nettoyer le filtre (34) de filtrage pour le décrassage à contre-courant, des bras-supports (37) s'étendant axialement et répartis régulièrement contre le pourtour du filtre (34) de filtrage pour le décrassage à contre-courant sont présents et sont maintenus associés en leurs extrémités inférieures au moyen d'un anneau-support (38) et vers le haut par une plaque de maintien (39) annulaire commune.

7. Dispositif selon revendication 6, caractérisé par le fait que la plaque de maintien (39) est agencée autour du tube de guidage (16) et est maintenue, avec immobilisation axiale et radiale, sur un bord d'appui (17) du tube de guidage (16).

8. Dispositif selon revendication 7,caractérisé par le fait que le tube-broche (27) possède une ouverture de passage transversale (28) qui, lors de la marche normale du dispositif filtrant, est fermée par un moignon tubulaire (29) de la partie fond (30) de la cloche à filtres (7), et qui est ouverte lors du décrassage à contre-courant.

9. Dispositif selon revendication 1, caractérisé par le fait que les brosses de nettoyage (35, 36) sont disposées dans des guides de manière à pouvoir être remplacées.
